(19) Europäisches Patentamt
European Patent Office
Office européen des brevets

(11) EP 4 596 235 A1

(12) EUROPEAN PATENT APPLICATION
published in accordance with Art. 153(4) EPC

(43) Date of publication:
**06.08.2025 Bulletin 2025/32**

(21) Application number: **23871765.6**

(22) Date of filing: **05.09.2023**

(51) International Patent Classification (IPC):
***B32B 23/08*** *(2006.01)* ***B32B 27/30*** *(2006.01)*
***C08J 7/04*** *(2020.01)*

(52) Cooperative Patent Classification (CPC):
**B32B 23/08; B32B 27/30; C08J 7/04**

(86) International application number:
**PCT/JP2023/032321**

(87) International publication number:
**WO 2024/070525 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 JP 2022157285**

(71) Applicant: **FUJIFILM Corporation**
**Tokyo 106-8620 (JP)**

(72) Inventors:
- **NAKAMICHI, Aki**
  **Minamiashigara-shi, Kanagawa 250-0193 (JP)**
- **SUZUKI, Takato**
  **Minamiashigara-shi, Kanagawa 250-0193 (JP)**

(74) Representative: **HGF**
**HGF Limited**
**1 City Walk**
**Leeds LS11 9DX (GB)**

# (54) COVER FILM

(57) An object of the present invention is to provide a cover film having more excellent adhesiveness to a base material in a case where a bonded body of the cover film and the base material is stored for a long period of time.

The cover film of the present invention includes a support and a polymer layer containing a polymer, in which the support contains a cellulose triacetate derived from wood pulp, and the polymer layer satisfies the following requirement 1. Requirement 1: residual rate of the polymer layer is 10% to 50% by mass before and after the polymer layer is immersed in xylene at 25°C after being peeled off from the cover film.



Processed by Luminess, 75001 PARIS (FR)

## Description

## BACKGROUND OF THE INVENTION

1. Field of the Invention

The present invention relates to a cover film.

2. Description of the Related Art

In a medical field, a method of observing a specimen for microscopic observation with a microscope has been known in cytodiagnosis, histopathology, and the like. Examples of a method of preparing the specimen for microscopic observation include a method of automatically overlapping a substrate on which a test subject is placed with a cover film using an automatic enclosing device to adhere (hereinafter, also referred to as "enclose") the cover film and the substrate, the cover film having a polymer (for example, an adhesive, a compound which can be used as the adhesive, or the like) formed on a support in advance, the substrate being a substrate (for example, a glass slide or the like) onto which few drops of a solvent capable of swelling and/or dissolving the polymer (hereinafter, also referred to as "enclosing solution") is dropped. According to this method, it is possible to produce a specimen for microscopic observation, in which the test subject is fixed between the substrate and the cover film.

For example, US10988590B discloses a transparent coating film including a support containing cellulose triacetate in which a raw material is a cotton linter, and a coating layer obtained by applying a coating solution containing at least two solvents, an acrylic copolymer, a cellulose derivative, and a plasticizer.

## SUMMARY OF THE INVENTION

The present inventors have studied performance of a cover film including a support and a polymer layer with reference to US10988590B, and have found that there is room for further improvement in adhesiveness between a base material and the polymer layer in a case where a bonded body obtained by bonding the cover film to the base material is stored for a long period of time, depending on the configuration of the support and the polymer layer.

An object of the present invention is to provide a cover film having more excellent adhesiveness to a base material in a case where a bonded body of the cover film and the base material is stored for a long period of time.

As a result of intensive studies on the above-described object, the present inventors have found that the above-described object can be achieved by the following configurations.

[1] A cover film comprising:

a support; and
a polymer layer containing a polymer,
in which the support contains a cellulose triacetate derived from wood pulp, and
the polymer layer satisfies a requirement 1 described later.

[2] The cover film according to [1],
in which the polymer includes a polymer A which is at least one selected from the group consisting of an acrylic resin and a polyester resin.
[3] The cover film according to [1] or [2],
in which the polymer includes an acrylic resin which has two or more repeating units derived from a monomer selected from the group consisting of an acrylate monomer and a methacrylate monomer.
[4] The cover film according to [2] or [3],
in which a weight-average molecular weight of the acrylic resin is 50,000 to 150,000.
[5] The cover film according to any one of [1] to [4],
in which a glass transition temperature of the polymer layer is 35°C or higher.
[6] The cover film according to any one of [1] to [5],
in which the polymer includes a polymer B1 having a Hansen solubility parameter distance to xylene of 8 $MPa^{0.5}$ or more.
[7] The cover film according to [6],
in which the polymer B1 includes at least one selected from the group consisting of a polymer having a polyoxyalkylene chain, a polymer having a polyalkyleneimine chain, a polymer having a cyclic amide group, and a cellulose acetate.
[8] The cover film according to any one of [1] to [5],

in which the polymer includes a polymer B2 having a crosslinking structure.
[9] The cover film according to any one of [1] to [8],
in which the polymer layer further contains a plasticizer.
[10] The cover film according to any one of [1] to [9],
in which the cover film is used for covering a test subject on a base material in microscopic observation.

According to the present invention, it is possible to provide a cover film having more excellent adhesiveness to a base material in a case where a bonded body of the cover film and the base material is stored for a long period of time.

## DESCRIPTION OF THE PREFERRED EMBODIMENTS

Hereinafter, the present invention will be described in detail.
Although configuration requirements related to embodiments of the present invention are described based on the representative embodiments of the present invention, the present invention is not limited to the embodiments.
In the present specification, the numerical ranges shown using "to" mean ranges including the numerical values described before and after "to" as the minimum value and the maximum value. In a range of numerical values described in stages in the present specification, the upper limit value or the lower limit value described in a certain range of numerical values may be replaced with an upper limit value or a lower limit value of the range of numerical values described in other stages. In addition, regarding the numerical range described in the present specification, an upper limit value or a lower limit value described in a numerical value may be replaced with a value described in Examples.
In the present specification, a combination of two or more preferred aspects is a more preferred aspect.
In the present specification, in a case where a plurality of substances corresponding to each component in a composition or in a layer is present, the amount of each component in the composition or in the layer means the total amount of the plurality of substances present in the composition, unless otherwise specified.
In the present specification, "(meth)acryl" is a generic term encompassing acryl and methacryl, and means "one or more of acryl and methacryl". Similarly, "(meth)acrylate" means "one or more of acrylate and methacrylate"; "(meth) acryloyl group" means "one or more of acryloyl group and methacryloyl group"; and "acrylic resin" means "polymer having one or more repeating units derived from an acrylate monomer and/or a methacrylate monomer".
In the present specification, unless specified otherwise, a refractive index refers to a value which is measured using an Abbe refractometer ("NAR-2T", manufactured by Atago Co., Ltd.) with respect to light having a wavelength of 550 nm.
In the present specification, a weight-average molecular weight (Mw) and a number-average molecular weight (Mn) are molecular weights in terms of polystyrene used as a standard substance, which are detected by using a solvent tetrahydrofuran (THF), a differential refractometer, and a gel permeation chromatography (GPC) analyzer using TSKgel GMHxL, TSKgel G4000HxL, TSKgel G2000HxL, and/or TSKgel Super HZM-N (all trade names manufactured by Tosoh Corporation) as columns, unless otherwise specified.

[Cover film]

The cover film according to the embodiment of the present invention includes a support and a polymer layer containing a polymer, in which the support contains a cellulose triacetate derived from wood pulp.
In addition, the polymer layer included in the cover film according to the embodiment of the present invention satisfies the following requirement 1.
Requirement 1: a residual rate of the polymer layer is 10% to 50% by mass before and after the polymer layer is immersed in xylene at 25°C after being peeled off from the cover film.
A detailed mechanism by which adhesiveness between the cover film and a base material is improved in a case where the cover film according to the embodiment of the present invention includes the support containing a cellulose triacetate derived from wood pulp and the polymer layer satisfies the above-described requirement 1 is not clear, but the present inventors presume as follows.
In a bonded body obtained by bonding the cover film and the base material using an enclosing solution, in a case where the above-described residual rate of the polymer layer is 10% by mass or more, it is considered that a component having a property of being difficult to dissolve in xylene in the above-described immersion test is appropriately entangled with the cellulose triacetate derived from wood pulp, constituting the support, and thus excellent adhesiveness is exhibited, and the adhesiveness is maintained even in a case where the bonded body is stored for a long period of time. In particular, it is considered that the above-described adhesiveness is excellent because a molecular structure of the cellulose triacetate derived from wood pulp is irregular. On the other hand, in a case where the above-described residual rate of the polymer layer is 50% by mass or less, it is considered that the polymer layer is appropriately dissolved during production of the bonded body, and thus the adhesiveness between the cover film and the base material after long-term storage is improved.

In the present specification, "effect of the present invention" means the adhesiveness between the cover film and the base material in a case where a bonded body obtained by bonding the cover film to the base material is stored for a long period of time.

Hereinafter, the configuration of the cover film will be described.

[Support]

The support contains a cellulose triacetate derived from wood pulp (hereinafter, also referred to as "specific TAC"). The wood pulp is pulp obtained by steam-digesting wood such as broad-leaved trees and coniferous trees by a known method, and the specific TAC is a cellulose triacetate manufactured using the wood pulp as a raw material.

As the support, a support consisting of the specific TAC is preferable.

The specific TAC can be identified by constituent sugars of hemicellulose contained in the cellulose triacetate. More specifically, in a case where a ratio {(Total molar amount of mannose and xylose)/(Total molar amount of constituent sugars of cellulose triacetate)} of the total molar amount of mannose and xylose among constituent sugars of the cellulose triacetate to the total molar amount of constituent sugars of the cellulose triacetate is 0.5% or more, it can be determined that the cellulose triacetate is the specific TAC. On the other hand, in a case where the above-described ratio is less than 0.5%, it can be determined that the cellulose triacetate is derived from a linter.

The molar amount of the constituent sugar contained in the cellulose triacetate can be analyzed according to a method described in JP2005-82744A.

A degree of substitution of an acetyl group in the specific TAC is, for example, 2.50 to 3.00, preferably 2.80 to 2.95.

Examples of a method of measuring the above-described degree of substitution include known measuring methods such as an FT-IR method and a titration method.

A weight-average molecular weight (Mw) of the specific TAC contained in the support is, for example, 10,000 to 1,000,000, preferably 30,000 to 300,000.

A method for producing the specific TAC is not particularly limited, and for example, the specific TAC can be produced by a known method in which wood pulp is subjected to an activation treatment with acetic acid or the like, triacetate is prepared with anhydrous acetic acid using a sulfuric acid catalyst, and the degree of substitution is adjusted by a saponification (hydrolysis) treatment.

It is preferable that the support contains the specific TAC as a main component. The "main component" means a component having the highest content among components contained in the support.

A content of the specific TAC contained in the support is preferably more than 50% by mass, and more preferably 80% by mass or more with respect to the total mass of the support. The upper limit value thereof is not particularly limited, and may be 100% by mass or less with respect to the total mass of the support.

The support may contain a material other than the specific TAC.

As other materials contained in the support, known materials used for the support of the cover film can be used; and examples thereof include cellulose-based polymers such as cellulose diacetate, cellulose acetate propionate, and cellulose acetate butyrate (here, the specific TAC is excluded); polyester-based polymers such as aliphatic polyester; polyolefin-based polymers such as cycloolefin polymer (COP), polyethylene, and polypropylene; acrylic resins; polycarbonate (PC); and polystyrene.

The support may contain an additive.

Examples of the additive include a retardation control agent, a deterioration preventing agent, an ultraviolet preventing agent, a peeling accelerator, a plasticizer, an infrared absorber, and a matting agent.

In a case where the support contains a resin other than the specific TAC and/or an additive, the total content thereof may be the remainder of the specific TAC.

<Physical properties of support>

A thickness of the support is not particularly limited, but is preferably 50 to 250 μm, more preferably 50 to 150 μm, and still more preferably 100 to 150 μm.

In addition, a refractive index of the support is not particularly limited, and may be, for example, 1.44 to 1.60. From the viewpoint that visibility in a case of being bonded to the base material is more excellent, the refractive index of the support is preferably 1.46 to 1.56, which is close to that of a glass slide (refractive index: 1.52 to 1.56).

From the viewpoint of further improving the visibility in a case of being bonded to the base material, the support is preferably a transparent support. In the present specification, the "transparent" means that a transmittance with respect to visible light (wavelength: 380 to 780 nm) is 60% or more. The transmittance refers to a proportion of transmitted light to incidence light into the support.

The support can be produced from a raw material containing the specific TAC, according to a known film-forming method such as solution film formation and melt film formation.

A surface treatment such as ultraviolet irradiation, corona discharge, or glow discharge may be performed on the support.

[Polymer layer]

The cover film includes a polymer layer which contains a polymer and satisfies the above-described requirement 1.

Whether or not the polymer layer satisfies the requirement 1, that is, whether or not the residual rate of the polymer layer (hereinafter, also referred to as "xylene residual rate") before and after immersing the polymer layer peeled off from the cover film in xylene at 25°C is 10% to 50% by mass is confirmed by the following method.

The polymer layer is peeled off from the cover film, and the polymer layer having an area corresponding to a circle having a diameter of 20 mm is cut out to obtain a sample of the polymer layer. The obtained sample is immersed in 2 g of xylene (temperature: 25°C). After being immersed for a sufficient time (for example, 4 hours or longer), a residue which does not dissolve in xylene is taken out, and xylene is completely removed from the residue by drying. From a weight of the sample before the immersion and a weight of the residue after the immersion, the xylene residual rate (% by mass) is calculated by the following expression.

Xylene residual rate = {(Weight of sample before immersion - Weight of residue after immersion)/Weight of sample before immersion} $\times$ 100

The xylene is a typical solvent used for enclosing, but even in a case where the solvent used for enclosing is other than the xylene, in a case where the support contains the specific TAC and the xylene residual rate is within the above-described range, the adhesiveness in a case where the bonded body with the base material is stored for a long period of time can be achieved, and thus the object of the present invention can be achieved.

From the viewpoint that the effect of the present invention is more excellent, the xylene residual rate is preferably 15% to 40% by mass and more preferably 28% to 37% by mass.

The xylene residual rate of the polymer layer can be adjusted by changing the type and content of components contained in the polymer layer.

<Polymer>

The polymer constituting the polymer layer is not particularly limited as long as the polymer layer satisfies the requirement 1. It is preferable that the polymer constituting the polymer layer is swollen with an organic solvent (particularly, xylene) used for an automatic enclosing device as an enclosing solution, and it is more preferable to be dissolved in the organic solvent.

Examples of the organic solvent used as an enclosing solution in the automatic enclosing device include any single solvent of xylene, toluene, mesitylene (1,3,5-trimethylbenzene), pseudocumene (1,2,4-trimethylbenzene), hemimellitene (1,2,3-trimethylbenzene), durene (1,2,4,5-tetramethylbenzene), 3-methylbutyl acetate, anisole, ethyl propionate, amyl acetate, propyl acetate, isopropyl acetate, butyl acetate, methyl lactate, dimethyl carbonate, 1-butanol, 1-propanol, 2-butanol, 1-pentanol, 2-pentanol, isoamyl alcohol, t-amyl alcohol, neopentyl alcohol, cyclopentanol, 2-hexanol, 4-methyl-2-pentanol, methyl isobutyl ketone, acetylacetone, cyclopentanone, n-butyl ether, 1,2-dimethoxyethane, dioxane, cyclopentyl methyl ether, 1-methoxy-2-propanol, 2-methoxy-1-methylethyl acetate, ethyl acetate, methyl acetate, acetone, and methyl ethyl ketone, and a mixed solvent of two or more thereof.

In a case where the polymer constituting the polymer layer is swollen with the organic solvent or is dissolved in the organic solvent, the cover film and the substrate are bonded to each other (an adhesive site is formed), and the test subject can be enclosed.

(Polymer A)

From the viewpoint of excellent solubility in the organic solvent (particularly, xylene), the polymer constituting the polymer layer preferably includes at least one polymer (hereinafter, also referred to as "polymer A") selected from the group consisting of an acrylic resin and a polyester resin, and more preferably includes an acrylic resin.

The components and formulation of the polymer or the like contained in the polymer layer are obtained by measuring a sample of the polymer layer, which is taken from the cover film, by a known method such as $^1$H-nuclear magnetic resonance (NMR) and gel permeation chromatography (GPC).

-Acrylic resin-

Examples of the acrylic resin include a polymer having a repeating unit derived from an acrylate monomer and/or a methacrylate monomer. The acrylic resin may be a homopolymer of one kind of monomer selected from the group consisting of an acrylate monomer and a methacrylate monomer, or may be a copolymer of two or more kinds of monomers selected from the group consisting of an acrylate monomer and a methacrylate monomer.

Among these, from the viewpoint that adhesiveness after being dissolved in an enclosing solvent such as xylene is more excellent, an acrylic resin having two or more repeating units derived from a monomer selected from the group consisting of an acrylate monomer and a methacrylate monomer is preferable.

In addition, the acrylic resin may be a copolymer of one or more monomers selected from the group consisting of an acrylate monomer and a methacrylate monomer and one or more monomers other than the acrylate monomer and the methacrylate monomer (for example, an acrylamide monomer such as dimethylacrylamide or isopropylacrylamide, or a vinyl monomer such as styrene).

In addition, it is preferable that the acrylic resin does not have a crosslinking structure described later.

In the acrylic resin, the total content of the repeating unit derived from an acrylate monomer and a methacrylate monomer is preferably 50% by mass or more, more preferably 70% by mass or more, and still more preferably 90% by mass or more with respect to all repeating units of the acrylic resin. The upper limit of the total content of the repeating unit derived from an acrylate monomer and a methacrylate monomer is not particularly limited, and may be 100% by mass with respect to all repeating units of the acrylic resin.

It is particularly preferable that the acrylic resin includes only the repeating unit derived from an acrylate monomer and/or a methacrylate monomer.

Examples of the acrylate monomer and the methacrylate monomer described above include an alkyl acrylate and an alkyl methacrylate.

The alkyl group in the alkyl acrylate and the alkyl methacrylate may be linear or branched. The above-described alkyl group may further have a substituent. Examples of the above-described substituent include an aryl group and a hydroxy group, and an aryl group is preferable and a phenyl group is more preferable. The number of carbon atoms in the alkyl group in the alkyl acrylate and the alkyl methacrylate, which may have a substituent, is preferably 1 to 15, more preferably 1 to 8, still more preferably 1 to 5, and particularly preferably 1 to 3.

Specific examples of the above-described alkyl acrylate monomer include methyl acrylate, ethyl acrylate, n-propyl acrylate, i-propyl acrylate, n-butyl acrylate, i-butyl acrylate, t-butyl acrylate, 2-ethylhexyl acrylate, cyclohexyl acrylate, lauryl acrylate, phenyl acrylate, benzyl acrylate, 2-methoxyethyl methacrylate, hydroxyethyl acrylate, and acetoacetoxyalkyl acrylate.

Specific examples of the above-described alkyl methacrylate monomer include methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, cyclohexyl methacrylate, phenyl methacrylate, benzyl methacrylate, lauryl methacrylate, 2-methoxyethyl methacrylate, hydroxyethyl methacrylate, and acetoacetoxyalkyl methacrylate.

As the acrylic resin, an acrylic resin including a repeating unit derived from ethyl acrylate, a repeating unit derived from methyl methacrylate, and a repeating unit derived from an alkyl methacrylate other than methyl methacrylate is most preferable. Examples of the above-described alkyl methacrylate include ethyl methacrylate.

The acrylic resin can be synthesized by a known method, for example, by polymerizing one or more monomers selected from the group consisting of an acrylate monomer and a methacrylate monomer.

A weight-average molecular weight (Mw) of the acrylic resin is preferably 10,000 to 500,000, more preferably 50,000 to 150,000, and still more preferably 60,000 to 120,000.

-Polyester resin-

Examples of the polyester resin include a polyester obtained by polycondensation of a dicarboxylic acid and a diol.

As the polyester resin, a polycondensation polyester obtained from at least one dicarboxylic acid having an aromatic ring (aromatic dicarboxylic acid) and at least one diol is more preferable. That is, a polycondensation polyester containing at least one aromatic dicarboxylic acid residue and at least one diol residue is more preferable.

Here, the residue is a partial structure of the polyester resin, and represents a partial structure derived from a monomer for forming the polyester resin. For example, a dicarboxylic acid residue formed from a dicarboxylic acid "HOOC-R-COOH (R represents a hydrocarbon group)" is "-OC-R-CO-".

In addition, it is preferable that the polyester resin does not have a crosslinking structure described later.

Examples of the aromatic dicarboxylic acid include phthalic acid, terephthalic acid, isophthalic acid, 1,5-naphthalenedicarboxylic acid, 1,4-naphthalenedicarboxylic acid, 1,8-naphthalenedicarboxylic acid, 2,8-naphthalenedicarboxylic acid, and 2,6-naphthalenedicarboxylic acid. Among these, phthalic acid, terephthalic acid, or isophthalic acid is

preferable; phthalic acid or terephthalic acid is more preferable; and terephthalic acid is still more preferable.

The aromatic dicarboxylic acid used for forming the aromatic dicarboxylic acid residue may be used alone or in combination of two or more kinds thereof.

The polyester resin may contain an aliphatic dicarboxylic acid residue in addition to the aromatic dicarboxylic acid residue.

Examples of an aliphatic dicarboxylic acid include oxalic acid, malonic acid, succinic acid, maleic acid, fumaric acid, glutaric acid, adipic acid, pimelic acid, suberic acid, azelaic acid, sebacic acid, dodecanedicarboxylic acid, and 1,4-cyclohexanedicarboxylic acid.

The aliphatic dicarboxylic acid used for forming the aliphatic dicarboxylic acid residue may be used alone or in combination of two or more kinds thereof.

Examples of the diol for forming the polyester resin include an aromatic diol and an aliphatic diol.

The polyester resin preferably contains an aliphatic diol residue. For example, a diol residue formed from a diol "HO-R-OH" is "-O-R-O-".

Examples of an aliphatic diol for forming the aliphatic diol residue include an alkyldiol and an alicyclic diol. More specific examples thereof include ethylene glycol, 1,2-propanediol, 1,3-propanediol, 1,2-butanediol, 1,3-butanediol, 2-methyl-1,3-propanediol, 1,4-butanediol, 1,5-pentanediol, 2,2-dimethyl-1,3-propanediol (neopentyl glycol), 2,2-diethyl-1,3-propanediol (3,3-dimethyl-olepentane), 2-n-butyl-2-ethyl-1,3-propanediol (3,3-dimethylolheptane), 3-methyl-1,5-pentanediol, 1,6-hexanediol, 2,2,4-trimethyl-1,3-pentanediol, 2-ethyl-1,3-hexanediol, 2-methyl-1,8-octanediol, 1,9-nonanediol, 1,10-decanediol, 1,12-octadecanediol, diethylene glycol, and cyclohexanedimethanol.

As the aliphatic diol, ethylene glycol, 1,2-propanediol, or 1,3-propanediol is preferable, and ethylene glycol or 1,2-propanediol is more preferable.

The aliphatic diol used for forming the aliphatic diol residue may be used alone or in combination of two or more kinds thereof.

A terminal of the polyester resin may be in a non-sealed state or a sealed state, but it is preferable to seal the terminal by reacting a monocarboxylic acid or a monoalcohol with a hydroxyl group or a carboxyl group as a terminal group.

As the monocarboxylic acid used for the terminal sealing, acetic acid, propionic acid, butanoic acid, or benzoic acid is preferable; acetic acid or propionic acid is more preferable; and acetic acid is still more preferable. As the monoalcohol used for the terminal sealing, methanol, ethanol, propanol, isopropanol, butanol, or isobutanol is preferable, and methanol is more preferable.

The terminal group of the polyester resin is preferably an acyl group, an alkoxy group, or an aryloxy group, and more preferably an acetyl group or a propionyl group.

The polyester resin can be synthesized by a known method such as a thermal fusion polymerization method of polycondensing the diol and the dicarboxylic acid, and an interfacial polymerization method of an acid chloride of the dicarboxylic acid and glycols.

The polymer A may be used alone or in combination of two or more kinds thereof. In a case where two or more kinds of polymers A are used, it is preferable that the two or more kinds of polymers A are used at a ratio at which turbidity does not occur in a dried film obtained by mixing the two or more kinds of polymers.

A content of the polymer A in the polymer layer is not particularly limited, but is preferably 50% to 80% by mass and more preferably 60% to 70% by mass with respect to the total mass of the polymer layer.

(Polymer B)

The polymer layer may contain a polymer other than the above-described polymer A.

Examples of the polymer other than the polymer A include a polymer B1 having a Hansen solubility parameter distance to xylene of 5 $MPa^{0.5}$ or more, and a polymer B2 having a crosslinking structure.

From the viewpoint that the effect of the present invention is more excellent, it is preferable that the polymer layer contains, in addition to the above-described polymer A, at least one polymer (hereinafter, also referred to as "polymer B") selected from the group consisting of the polymer B1 and the polymer B2.

-Polymer B 1-

The polymer layer preferably contains, in addition to the above-described polymer A, a polymer B1 having a Hansen solubility parameter distance (hereinafter, also referred to as "ΔHSP") to xylene of 5 $MPa^{0.5}$ or more.

As the polymer B1, a polymer having a ΔHSP to xylene of 8 $MPa^{0.5}$ or more is preferable, and a polymer having a ΔHSP to xylene of 10 $MPa^{0.5}$ or more is more preferable. The upper limit of the ΔHSP is not limited, and may be, for example, 40 $MPa^{0.5}$ or less.

The Hansen solubility parameters (HSP) are obtained by dividing the solubility of a substance into three components (a dispersion element δD, a polarity element δP, and a hydrogen bond element δH) and representing the

components in a three-dimensional space. The dispersion element δD indicates an effect of a dispersion force, the polarity element δP indicates an effect of a dipole-dipole force, and the hydrogen bond element δH indicates an effect of a hydrogen bonding force.

The Hansen solubility parameter distance (ΔHSP) of the polymer to xylene is calculated from the following expression (D).

$$\text{Expression (D)} \quad \Delta HSP = (4 \times (dDa - dDb)^2 + (dPa - dPb)^2 + (dHa - dHb)^2)^{0.5}$$

dDa: dispersion element of polymer (unit: $MPa^{0.5}$)
dPa: polarization element of polymer (unit: $MPa^{0.5}$)
dHa: hydrogen bond element of polymer (unit: $MPa^{0.5}$)
dDb: dispersion element of xylene (unit: $MPa^{0.5}$)
dPb: polarization element of xylene (unit: $MPa^{0.5}$)
dHb: hydrogen bond element of xylene (unit: $MPa^{0.5}$)

The values of the dispersion element, the polarization element, and the hydrogen bond element of the polymer are obtained based on the formulation of the polymer identified by a known method.

In a case where the polymer is composed of two or more kinds of repeating units, as the δDa, δPa, and δHa, numerical values obtained by multiplying the dispersion element, the polarity element, or the hydrogen bond element of each repeating unit by the mass content of each repeating unit are used respectively. In addition, instead of the Hansen solubility parameter of the repeating unit constituting the polymer, a Hansen solubility parameter of a monomer inducing the repeating unit may be used.

The definition and calculation method of the Hansen solubility parameters of each compound are described in Hansen Solubility Parameters: A User's Handbook (CRC Press, 2007) by Charles M. Hansen. In addition, by using computer software Hansen Solubility Parameters in Practice (HSPiP), the Hansen solubility parameters can be easily estimated from the chemical structure even for a compound in which a literature value or the like is not known.

In the present specification, for the Hansen solubility parameters including ΔHSP, a value calculated from Y-MB method by HSPiP (ver. 5) is used.

Examples of the polymer B1 in which ΔHSP is within the above-described range include a polymer having a polyoxyalkylene chain, a polymer having a polyethyleneimine chain, a polymer having a cyclic amide group, and cellulose acetate; and a polymer having a polyoxyalkylene chain, a polymer having a cyclic amide group, or cellulose acetate is preferable.

The polymer having a polyoxyalkylene chain is a polymer compound having a polyoxyalkylene chain formed by repeating an oxyalkylene group in at least one of a main chain or a side chain.

Examples of an alkylene group constituting the polyoxyalkylene chain include a linear or branched alkylene group having 1 to 6 carbon atoms; and an ethylene group, a propylene group, or a butylene group is preferable.

The oxyalkylene group constituting the polyoxyalkylene chain may be used alone or in combination of two or more kinds thereof. In a case where the polyoxyalkylene chain has two or more kinds of oxyalkylene groups, the polyoxyalkylene chain may be a block polymer or a random polymer, which is a polymer of the two or more kinds of oxyalkylene groups.

Examples of the polymer having the polyoxyalkylene chain in the main chain include polyethylene glycol, amino group-terminated polyethylene glycol, polypropylene glycol, amino group-terminated polypropylene glycol, polybutylene glycol, and amino group-terminated polybutylene glycol.

In the polymer having the polyoxyalkylene chain in the side chain, a structure of the main chain is not particularly limited, and examples thereof include polyurethane, polystyrene, polyester, polyamide, polyimide, and polyurea; and polyurethane is preferable.

The number of repetitions of the oxyalkylene group in the polyoxyalkylene chain present in the side chain of the polymer is not particularly limited, but is preferably 2 to 50 and more preferably 3 to 20.

A weight-average molecular weight (Mw) of the polymer having the polyoxyalkylene chain is preferably 1,000 to 150,000 and more preferably 10,000 to 100,000.

The polymer having a polyalkyleneimine chain is a polymer compound having a polyalkyleneimine chain consisting of an amine and an alkylene group in at least one of a main chain or a side chain.

Examples of the alkylene group constituting the polyalkyleneimine chain include a linear or branched alkylene group having 1 to 6 carbon atoms; and an ethylene group, a propylene group, or a butylene group is preferable and an ethylene group is more preferable.

As the polymer having the polyoxyalkylene chain in the main chain, polyethyleneimine obtained by ring-opening polymerization of ethyleneimine is preferable. Examples of the polyethyleneimine include linear, branched, and dendrimeric forms.

In the polymer having the polyalkyleneimine chain in the side chain, a structure of the main chain is not particularly limited, and examples thereof include the structure of the main chain of the polymer having the polyoxyalkylene chain in the side chain described above.

The number of repetitions of the alkyleneimine group in the polyalkyleneimine chain present in the side chain of the polymer is not particularly limited, but is preferably 2 to 50 and more preferably 3 to 20.

A weight-average molecular weight (Mw) of the polymer having the polyalkyleneimine chain is preferably 1,000 to 150,000 and more preferably 10,000 to 100,000.

The polymer having a cyclic amide group is a polymer compound having a cyclic amide group in a side chain.

Examples of the cyclic amide group include groups having a structure derived from N-vinylpyrrolidone or N-vinylcaprolactam.

Examples of the polymer having the cyclic amide group include polyvinylpyrrolidone, polyvinylcaprolactam, and a copolymer of a cyclic amide group-containing monomer such as N-vinylpyrrolidone and N-vinylcaprolactam and a vinyl group-containing monomer such as vinyl acetate; and polyvinylpyrrolidone, polyvinylcaprolactam, or a copolymer of N-vinylpyrrolidone and vinyl acetate is preferable.

A weight-average molecular weight (Mw) of the polymer having the cyclic amide group is preferably 1,000 to 150,000 and more preferably 10,000 to 100,000.

The cellulose acetate is cellulose in which at least a part of hydroxyl groups are substituted with acetyl groups, and examples thereof include cellulose diacetate, cellulose triacetate, and cellulose in which a part of hydroxyl groups are further substituted with acyl groups other than the acetyl groups.

The degree of substitution of the hydroxyl group in the cellulose acetate is not particularly limited, but in a case where the hydroxyl group of the cellulose acetate is substituted with only the acetyl group, the degree of substitution thereof is preferably 1 to 15 and more preferably 2 to 4. In addition, in a case where the hydroxyl group of the cellulose acetate is substituted with a group other than the acetyl group, the total degree of substitution thereof is preferably 1 to 50 and more preferably 30 to 50.

Examples of the acyl group other than the acetyl group, which substitutes the hydroxyl group in the cellulose acetate, include propionyl, butanoyl, dodecanoyl, octadecanoyl, t-butanoyl, oleoyl, benzoyl, naphthylcarbonyl, and cinnamoyl; and propionyl or butyloyl is preferable.

As the cellulose acetate, cellulose diacetate, cellulose triacetate, cellulose acetate propionate, or cellulose acetate butyrate is preferable, and cellulose acetate propionate or cellulose acetate butyrate is more preferable.

A weight-average molecular weight (Mw) of the cellulose acetate is preferably 1,000 to 150,000 and more preferably 10,000 to 100,000.

The polymer B1 may be used alone or in combination of two or more kinds thereof.

A content of the polymer B1 in the polymer layer is not particularly limited, but from the viewpoint that the effect of the present invention is more excellent, it is preferably 10% to 50% by mass and more preferably 30% to 40% by mass with respect to the total mass of the polymer layer.

-Polymer B2-

The polymer layer preferably contains, in addition to the above-described polymer A, a polymer B2 having a crosslinking structure.

The crosslinking structure of the polymer B2 means a three-dimensional network structure formed by crosslinking.

Examples of the polymer B2 having a crosslinking structure include a polymer and a copolymer, which are obtained by polymerizing a polyfunctional polymerizable compound having two or more polymerizable groups, and a crosslinked polymer obtained by reacting a polymer having a reactive group, which is obtained by polymerizing a polymerizable compound, with a crosslinking agent having two or more crosslinkable groups which react with the reactive group.

The polyfunctional polymerizable compound is not particularly limited as long as it is a monomer or oligomer having two or more polymerizable groups, and examples thereof include a polyfunctional radically polymerizable compound having two or more radically polymerizable groups such as a (meth)acryloyl group, a vinyl group, a styryl group, and an allyl group.

Examples of the polyfunctional radically polymerizable compound include a polyfunctional (meth)acrylate compound, a polyfunctional vinyl ether, and a polyfunctional allyl compound; and a polyfunctional (meth)acrylate compound is preferable.

Examples of the polyfunctional (meth)acrylate compound include 1,6-hexanediol di(meth)acrylate, dipropylene glycol di(meth)acrylate, tripropylene glycol di(meth)acrylate, PO-modified neopentyl glycol di(meth)acrylate, 1,4-butanediol di(meth)acrylate, 3-methyl-1,5-pentanediol di(meth)acrylate, polyethylene glycol di(meth)acrylate, 1,10-decanediol di(meth)acrylate, trimethylolpropane tri(meth)acrylate, and dipentaerythritol hexa(meth)acrylate.

Examples of the polymer constituting the above-described crosslinked polymer include an acrylic resin, a polyolefin resin, and a polyester resin.

Examples of the reactive group in the polymer include a hydroxyl group, an amino group, and a carboxy group. Examples of the crosslinking agent include a compound having two or more crosslinkable groups selected from the group consisting of a carboxy group, an epoxy group, an oxetanyl group, and an isocyanate group.

More specific examples of the crosslinked polymer include a crosslinked acrylic resin obtained by reacting an acrylic resin having a group selected from the group consisting of a hydroxyl group and an amino group with an isocyanate-based crosslinking agent (compound having two or more isocyanate groups) and/or an epoxy-based crosslinking agent (compound having two or more epoxy groups).

The polymer B2 may be used alone or in combination of two or more kinds thereof.

A content of the polymer B2 in the polymer layer is not particularly limited, but from the viewpoint that the effect of the present invention is more excellent, it is preferably 10% to 50% by mass and more preferably 30% to 40% by mass with respect to the total mass of the polymer layer.

<Additive>

The polymer layer may contain an additive other than the above-described polymer.

Examples of the additive which may be contained in the polymer layer include plasticizers, silane coupling agents, and particles.

(Plasticizer)

The polymer layer may contain a plasticizer, and preferably contains a plasticizer.

In a case where the polymer layer contains a plasticizer, the compatibility of the polymer layer with the enclosing solution (xylene or the like) can be assisted, a dissolution rate of the polymer layer in a case where the polymer layer is in contact with the solvent can be increased, and brittleness of the polymer layer can be improved.

Examples of the plasticizer include phosphoric acid ester-based plasticizers such as triphenyl phosphate, bisphenol A bis-(diphenyl phosphate), trimethyl phosphate, triethyl phosphate, and diphenyl-2-methacryloylethyl phosphate; adipic acid ester-based plasticizers such as dioctyl adipate, dibutyl adipate, diisobutyl adipate, ADK CIZER LV-808 (manufactured by ADEKA CORPORATION), and POLYCIZER W-242, W-230-H, W-1020-EL, and W-1430-EL; sebacic acid ester-based plasticizers such as dioctyl sebacate; maleate-based plasticizers such as dibutyl maleate; tris(2-ethylhexyl) trimellitate; and glycerin triacetate.

In addition, examples of the plasticizer also include phthalic acid ester-based plasticizers such as diethyl phthalate, dioctyl phthalate, dinonyl phthalate, didecyl phthalate, diisononyl phthalate, diundecyl phthalate, bis(2-ethylhexyl) phthalate, and isodecyl phthalate; trimellitic acid ester-based plasticizers such as ADK CIZER C series (for example, C-8 and the like; manufactured by ADEKA CORPORATION) and MONOCIZER W-705 (manufactured by DIC Corporation); pyromellitic acid ester-based plasticizers such as ADK CIZER UL-80 and UL-100 (manufactured by ADEKA CORPORATION); dipentaerythritol esters such as ADK CIZER UL-8 (manufactured by ADEKA CORPORATION); carboxylic acid ester-based plasticizers having an epoxy group, such as MONOCIZER W-150 (manufactured by DIC Corporation); and benzoic acid ester-based plasticizers such as MONOCIZER PB-3A (manufactured by DIC Corporation).

Furthermore, examples of the plasticizer also include deep eutectic solvents (DES). The deep eutectic solvent is a solvent containing a hydrogen bond acceptor compound and a hydrogen bond donor compound, and is a solvent in which an eutectic melting point is lowered and a melting point is significantly lowered by mixing the hydrogen bond acceptor compound and the hydrogen bond donor compound.

Examples of the hydrogen bond acceptor compound include a quaternary ammonium compound, a phosphorus compound, a metal salt, an amino acid, and a polyvalent carboxylic acid, and examples of the hydrogen bond donor compound include an alcohol compound, saccharides, a carboxylic acid, and an amine compound.

Examples of the deep eutectic solvent include compounds described in US2018/0194913A and 0025 to 0048 of JP2020-105336A.

As the plasticizer, a plasticizer having high compatibility with the polymer A contained in the polymer layer together with the plasticizer is preferable. Among these, a plasticizer having a Hansen solubility parameter distance ($\Delta$HSP) to the polymer A of 6 $MPa^{0.5}$ or less is more preferable, and a plasticizer having a $\Delta$HSP to the polymer A of 2 $MPa^{0.5}$ or less is still more preferable. The lower limit of the $\Delta$HSP is not limited, and may be 0 $MPa^{0.5}$.

The plasticizer is preferably a low-molecular-weight compound. Specifically, the molecular weight of the plasticizer is preferably 100 to 10,000, and more preferably 100 or more and less than 1,000.

In particular, from the viewpoint of further improving brittleness of the polymer layer, a phosphoric acid ester-based plasticizer, an adipic acid ester-based plasticizer, a maleate-based plasticizer, or a phthalic acid ester-based plasticizer is preferable as the plasticizer.

The plasticizer may be used alone or in combination of two or more kinds thereof.

In a case where the polymer layer contains a plasticizer, a content of the plasticizer is not particularly limited, but is preferably 0.5% by mass or more, and more preferably 1% by mass or more with respect to the total mass of the polymer layer. The upper limit thereof is not particularly limited, but from the viewpoint of adhesiveness of the polymer layer to the base material, it is preferably 20% by mass or less and more preferably 10% by mass or less with respect to the total mass of the polymer.

(Silane coupling agents)

The polymer layer may contain at least one selected from the group consisting of a silane coupling agent, a hydrolyzate thereof, and a hydrolysis condensate thereof (hereinafter, these are also collectively referred to as "silane coupling agents").

From the viewpoint that blocking is less likely to occur between the polymer layer and a back surface of the support (surface of the support on a side opposite to the surface on which the polymer layer is formed) even in a case where the cover film is stored in a roll shape, and that storability for a long period of time is more excellent, it is preferable that the polymer layer contains the silane coupling agents.

The type of the silane coupling agent is not particularly limited, but a silane coupling agent which has two or more different reactive groups in a molecule, in which at least one of the reactive groups is a reactive group which is chemically bonded to an inorganic substance and at least one of the reactive groups is a reactive group which is chemically bonded to an organic material, is preferable.

It can be easily understood by those skilled in the art that the type of the silane coupling agent used in the polymer layer is selected depending on the type of the polymer constituting the polymer layer.

A content of the silane coupling agents in the polymer layer is preferably 0.1 $mg/m^2$ or more and more preferably 5 to 25 $mg/m^2$ per unit area of the polymer layer.

(Particles)

The polymer layer may contain particles.

The type of the particles is not particularly limited, and examples thereof include inorganic particles such as silica particles and titania particles, and organic particles consisting of a polymer such as PMMA; and silica particles are preferable.

From the viewpoint of suppressing bleed out (migration) of a hydrophilic material from a member in contact with the polymer layer, it is preferable that a surface of the inorganic particles is treated to be hydrophobic.

Sizes of the inorganic particles and the organic particles are not particularly limited, but in a case where the sizes are excessively large, scattering is likely to occur and visibility may be deteriorated, so that average secondary particle diameters of the inorganic particles and the organic particles (average particle diameter of aggregates of the inorganic particles and the organic particles) are preferably 1 μm or less. The lower limit value thereof is not particularly limited, and may be 1 nm or more. The average secondary particle diameters of the inorganic particles and the organic particles can be measured based on a dynamic light scattering method using a particle diameter measuring device ("nanoSAQLA" manufactured by Otsuka Electronics Co., Ltd.).

**In** a case where the polymer layer contains particles, from the viewpoint of preventing the scattering, it is preferable that a refractive index of the particles is close to the refractive index of the polymer layer. More specifically, the refractive indices of the inorganic particles and the organic particles are preferably 1.40 to 1.60.

In a case where the polymer layer contains particles, a content thereof is, for example, 0.5% to 20% by mass with respect to the total mass of the polymer layer.

<Physical properties of polymer layer>

(Thickness)

A thickness of the polymer layer is not particularly limited, and from the viewpoint of further improving the adhesiveness to the substrate such as glass slide, it is preferably 1 μm or more and more preferably 10 μm or more.

The upper limit value thereof is not particularly limited, and is, for example, 100 μm or less, preferably 40 μm or less, and more preferably 30 μm or less.

(Glass transition temperature (Tg))

From the viewpoint that viscoelasticity of the polymer layer decreases to suppress adhesiveness with another member and blocking resistance is further improved, a glass transition temperature Tg of the polymer layer is preferably 35°C or higher, and more preferably 45°C or higher.
The upper limit of the glass transition temperature Tg of the polymer layer is not particularly limited, but is preferably 130°C or lower from the viewpoint that the brittleness of the film can be improved.
A method of measuring the glass transition temperature Tg of the polymer layer will be described in Examples later.
The glass transition temperature Tg of the polymer layer can be adjusted depending on the type and content ratio of the polymer constituting the polymer layer.

(Refractive index)

From the viewpoint of optics during observation with a microscope, a refractive index of the polymer layer is preferably 1.45 to 1.56 that is close to that of glass (refractive index: 1.52 to 1.56), more preferably 1.46 to 1.56, and still more preferably 1.47 to 1.56.

[Other layers]

The cover film may include a layer other than the support and the polymer layer.
Examples of other layers include a backing layer.
In order to prevent scratches on the surface of the cover film, to prevent blocking during storage in an extremely high temperature environment, or to obtain a curling balance or the like of the cover film, the backing layer is provided on a back surface of the support (surface on a side opposite to the surface on which the polymer layer is provided).
Examples of a constituent material of the backing layer include a synthetic polymer having a high glass transition temperature, such as polystyrene and polymethyl methacrylate, and gelatin.

[Physical properties of cover film]

<Thickness>

A thickness of the cover film (sum of the thickness of the polymer layer and the thickness of the support) is not particularly limited, but from the viewpoint of more excellent operability and visibility during observation with a microscope, it is preferably 250 μm or less, more preferably 200 μm or less, and still more preferably 150 μm or less. From the viewpoint of more excellent handleability such as breakage resistance and sealing property, the lower limit thereof is preferably 50 μm or more.

[Manufacturing method of cover film]

A manufacturing method of the cover film is not particularly limited as long as it is a method of manufacturing a laminate including at least the support and the polymer layer, and it is preferable that the polymer layer is provided on the surface of the support.
A method of providing the polymer layer on the surface of the support is not particularly limited, and examples thereof include coating with a coater or a spray, casting, and transfer. Among these, it is preferable that a coating liquid containing a solvent and constitutional components of the polymer layer is applied onto the support, and then the coating film is dried to form the polymer layer.
The type of the solvent used in the coating liquid can be appropriately selected from the viewpoint of solubility, drying rate, and surface tension of the constitutional components of the polymer layer. Examples of the solvent used in the coating liquid include toluene, methyl acetate, ethyl acetate, butyl acetate, acetone, methyl ethyl ketone, cyclohexanone, tetrahydrofuran, methyl-t-butyl ether, and xylene.
In addition, in a case where a solvent capable of dissolving the surface of the support is used as the solvent used for the coating liquid, interfacial mixing of the constitutional components of the polymer and the support can be promoted, and an adhesion force between the polymer layer and the support can be increased.
From the above-described viewpoint, the coating liquid used for forming the polymer layer preferably includes a solvent selected from the group consisting of toluene, methyl acetate, ethyl acetate, butyl acetate, acetone, and methyl ethyl ketone, and more preferably includes at least one solvent selected from the group consisting of toluene, ethyl acetate, and acetone.

From the viewpoint that the surface structure of the polymer layer is easily controlled, it is preferable that two or more different solvents used for forming the polymer layer are mixed and used.

A content of the solvent selected from the group consisting of ethyl acetate and butyl acetate in the coating liquid is not particularly limited, but is preferably 40% by mass or more, more preferably 60% by mass or more, and still more preferably 70% by mass or more with respect to the total mass of solvents contained in the coating liquid. The upper limit thereof is not particularly limited, and may be 100% by mass or less, preferably 90% by mass or less.

Examples of the coating liquid used for forming the polymer layer include a mixed solution containing at least a solvent and each component constituting the polymer layer described above. In addition, as a material for forming the polymer layer, a mixed solution containing a monomer which is a raw material of the polymer may be used instead of a part or all of the polymer, a coating film may be formed on the support, and then the monomer may be polymerized to form the polymer layer containing the polymer.

In a case where the coating liquid contains the above-described raw material monomer, the coating liquid preferably contains various polymerization initiators. Examples of the polymerization initiator include a photopolymerization initiator and a thermal polymerization initiator; and the polymerization initiator can be appropriately selected depending on the type of the raw material monomer.

In addition, in a case of forming the polymer layer containing the polymer B2 having a crosslinking structure, the coating liquid may contain a crosslinking agent as necessary. The crosslinking agent can be appropriately selected depending on the type of the polymer forming the crosslinking structure and the type of the raw material monomer thereof.

After applying the above-described coating liquid onto the support to form a coating film, it is preferable to perform a drying step of drying the coating film to remove the solvent from the coating film.

Examples of the drying treatment in the drying step include a method (for example, natural drying) of leaving the coating film to stand at room temperature (23°C) for a predetermined time, blast drying of blasting gas to the coating film, heating drying of heating the coating film or the support using a heating unit such as an oven, a heating plate, and a heating roll, and a combination thereof. In the drying step, it is preferable to perform at least one of the blast drying or the heating drying, and it is more preferable to perform a combination of the blast drying and the heating drying.

A temperature of the gas used in the blast drying is not particularly limited, and is preferably 50°C to 160°C and more preferably 80°C to 140°C. Examples of the gas used in the blast drying include air and nitrogen.

A temperature of the heating drying by the above-described heating unit is not particularly limited, and is preferably 50°C to 160°C. In addition, a heating time is preferably 0.5 to 20 minutes.

[Applications]

The cover film according to the embodiment of the present invention can be suitably used as a cover film used for covering a test subject on a substrate. Among these, the cover film can be suitably used for preparing a specimen for microscopic observation, and can be more suitably applied to a microscope having an automatic enclosing device.

The applications of the cover film according to the embodiment of the present invention are not limited to the above-described applications, and for example, the cover film can be used for applications such as sealing of a thin film on a substrate and protection of an underlayer by lamination. In addition, the substrate bonded to the cover film may be glass or a film-shaped material (resin or the like).

## Examples

Hereinafter, the present disclosure will be more specifically described with reference to Examples. The materials, the used amounts, the proportions, the treatment contents, the treatment procedures, and the like described in the following examples can be appropriately changed without departing from the gist of the present invention. Therefore, the scope of the present invention is not limited to the following specific examples.

Unless specified otherwise, "part" and "%" are based on mass.

[Example 1]

<Preparation of coating liquid>

A polymer (polymer A-1) having a weight-average molecular weight of 100,000, in which a repeating unit based on ethyl acrylate, a repeating unit based on methyl methacrylate, and a repeating unit based on ethyl methacrylate were respectively contained with a mass ratio of 25/50/25, was synthesized by solution polymerization.

The above-described polymer A-1 (16 parts) and a component B1 (9 parts) described later were dissolved in a mixed solvent consisting of toluene (19 parts) and ethyl acetate (56 parts) to obtain a coating liquid 1 for forming a polymer layer. The formulation of the polymer was confirmed by $^{1}$H-nuclear magnetic resonance method (NMR).

<Production of support>

(Preparation of cellulose ester solution A1)

The following components were put into a mixing tank and stirred while being heated to dissolve each component, thereby preparing a cellulose ester solution A1.

· Cellulose triacetate derived from wood pulp (acetyl substitution degree: 2.86, viscosity-average degree of polymerization: 310): 100 parts by mass
· Sugar ester mixture obtained by mixing the following mixture of sugar ester compounds (I) and (II) and the following sugar ester compound (III) with a mass ratio of 12:3 (mixture of sugar ester compounds (I) and (II): sugar ester compound (III))
· Methylene chloride: 384 parts by mass
· Methanol: 69 parts by mass
· Butanol: 9 parts by mass

The addition amount of the above-described sugar ester mixture contained in the cellulose ester solution A1 was adjusted such that the content of the sugar ester mixture contained in the support A1 produced using the cellulose ester solution A1 (the total content of the above-described sugar ester compounds) was 12.3% by mass.

The above-described mixture of the sugar ester compounds (I) and (II) was a mixture of aromatic sugar ester compounds represented by General Formulae (I) and (II), in which G represents a sucrose residue, a substituent L-$R^1$ represents a benzoyl group, and an average degree of substitution of the sugar ester compounds (I) and (II) (average value of n and q) was 5.7.

(I) $(HO)_m\text{-}G\text{-}(L\text{-}R^1)_n$

(II) $(HO)_p\text{-}G\text{-}(L\text{-}R^1)_q$

In addition, the above-described sugar ester compound (III) was an aliphatic sugar ester compound represented by General Formula (III), in which G' represents a sucrose residue, a substituent L'-$R^2$ represents any one of an acetyl group or an isobutyryl group, and among 8 hydroxy groups in the sucrose residue, an average of 2 hydroxy groups are substituted with acetyl groups and an average of 6 hydroxy groups are substituted with isobutyryl groups.

(III) $(HO)t\text{-}G'\text{-}(L'\text{-}R^2)_r$

(Preparation of matting agent dispersion liquid B1)

The following components were put into a disperser and stirred to dissolve each component, thereby preparing a matting agent dispersion liquid B1.

· Silica particle dispersion (average particle diameter: 16 nm, "AEROSIL R972", manufactured by Nippon Aerosil Co., Ltd.): 10.0 parts by mass
· Methylene chloride: 72.8 parts by mass
· Methanol: 3.9 parts by mass
· Butanol: 0.5 parts by mass
· Cellulose ester solution A1: 10.3 parts by mass

The matting agent dispersion liquid B1 was added to the cellulose ester solution A1, and the mixture was sufficiently stirred while being heated to dissolve each component, thereby preparing a dope A1. A mixing ratio of the cellulose ester solution A1 and the matting agent dispersion liquid B1 was adjusted such that the total content of the sugar ester compounds represented by Formulae (I) to (III) in the support A1 produced using the dope A1 was 12.3% by mass.

(Formation of support A1)

The obtained dope A1 was heated to 30°C and cast on a mirror surface stainless steel drum having a diameter of 3 m, through a casting geeser. The surface temperature of the drum was set to -5°C, and the coating width was set to 1470 mm. A spatial temperature of the entire flow spreading part was set to 15°C. At a position 50 cm ahead of the end part of the

casting portion, the cellulose triacetate film formed on the surface of the drum was peeled off from the drum, and both ends of the peeled cellulose triacetate film in a width direction were clipped with a pin tenter.

The cellulose triacetate web held by the pin tenter was transported to a drying zone. In an initial drying, hot air at 45°C was blown. Next, the cellulose triacetate film was dried by heating at 110°C for 13 minutes and further heating at 140°C for 25 minutes to obtain a support A1 which was a cellulose triacetate film derived from wood pulp, having a thickness of 118 μm.

<Production of cover film>

The support A1 was coated with the coating liquid 1 in an amount such that a film thickness of solid contents (thickness of the polymer layer after drying) was 19 μm. Thereafter, the coating film formed on the support A1 was dried for 2 minutes in an environment of a wind speed of 3.2 m/s and 100°C, and further dried for 10 minutes at 100°C using an oven, thereby obtaining a cover film 1 including the support A1 and the polymer layer.

[Examples 2 to 10 and Comparative Examples 1 to 3]

Each of cover films of Examples 2 to 10 and Comparative Examples 1 to 3 was produced according to the method described in Example 1 above, except that, as a coating liquid for forming the polymer layer, each of coating liquids having formulations shown in Table 1 below was used.

In Example 8, the coating film formed on the cellulose triacetate film was dried according to the method described in Example 1, and then the dried coating film was irradiated with ultraviolet rays (irradiation amount: 1,000 $mJ/cm^2$) using a xenon lamp. As a result, a polymer layer containing a polymer (polymer B2 having a crosslinking structure) which was a polymer of a bifunctional monomer of the following component B-6 was formed.

The components used for preparing the coating liquid are shown below.

(Polymer A)

- · Polymer A-2: "UR-1400" manufactured by Toyobo Co., Ltd., polyester resin, number-average molecular weight: 40,000, Tg: approximately 83°C

(Component B)

- · Component B-1: "Hydromed D4" manufactured by AdvanSource Biomaterials Corp., polyurethane having a polybutylene oxide segment, Tg: approximately 30°C
- · Component B-2: "Hydromed D640" manufactured by AdvanSource Biomaterials Corp., polyurethane having a polybutylene oxide segment, Tg: approximately 50°C
- · Component B-3: "CAB-551-0.2" manufactured by Eastman Chemical Company, cellulose acetate butyrate, weight-average molecular weight: 30,000, Tg: 101°C
- · Component B-4: "CAP-482-0.5" manufactured by Eastman Chemical Company, cellulose acetate propionate, weight-average molecular weight: 25,000, Tg: 142°C
- · Component B-5: "PVP/VA S-630" manufactured by Ashland Japan Ltd., copolymer of polyvinylpyrrolidone/vinyl acetate, weight-average molecular weight: 51,000, Tg: 110°C
- · Component B-6: "TPGDA" manufactured by Daicel Corporation, tripropylene glycol diacrylate

(Additive)

- · Photopolymerization initiator: IRGACURE 907, 2-methyl-1-(4-methylthiophenyl)-2-morpholinopropan-1-one (MMMP)
- · Plasticizer: dibutyl maleate

[Comparative Example 4]

<Formation of support A2>

(Preparation of core layer cellulose acylate dope)

The following composition was put into a mixing tank and stirred to dissolve each component, thereby preparing a cellulose acetate solution used as a core layer cellulose acylate dope.

The formulation of the core layer cellulose acylate dope is shown below.

· Cellulose triacetate derived from linter (acetyl substitution degree: 2.88): 100 parts by mass
· Polyester A: 12 parts by mass
· Polarizer durability improving agent (A-3): 2 parts by mass
· Methylene chloride: 430 parts by mass
· Methanol: 64 parts by mass

The polyester A was a condensate of 1,2-cyclohexyldicarboxylic acid and ethylene glycol, and had a terminal structure in which hydrogen atoms of hydroxyl groups at both terminals of polyester were substituted (sealed) with a cyclohexanoyl group. In addition, the number-average molecular weight of the polyester A was 850.

The polarizer durability improving agent (A-3) was a compound represented by the following structural formula.

A-3

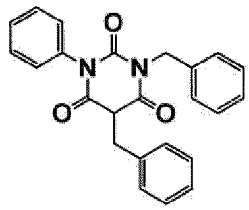

(Preparation of outer layer cellulose acylate dope)

10 parts by mass of the following matting agent solution was added to 90 parts by mass of the above-described core layer cellulose acylate dope to prepare a cellulose acetate solution used as an outer layer cellulose acylate dope.

The formulation of the matting agent solution is shown below.

· Silica particles having an average particle diameter of 20 nm (AEROSIL R972, manufactured by Nippon Aerosil Co., Ltd.): 2 parts by mass
· Methylene chloride: 76 parts by mass
· Methanol: 11 parts by mass
· Core layer cellulose acylate dope: 1 part by mass

(Formation of support A2)

The core layer cellulose acylate dope and the outer layer cellulose acylate dope described above were filtered through filter paper having an average hole diameter of 34 μm and a sintered metal filter having an average pore size of 10 μm, and three layers which were the core layer cellulose acylate dope and the outer layer cellulose acylate dopes provided on both sides of the core layer cellulose acylate dope were simultaneously cast from a casting port onto a drum at 20°C (band casting machine). Subsequently, the laminated film was peeled off from the support, both ends of the film in the width direction were fixed by tenter clips, and the film was dried while being stretched at a stretching ratio of 1.1 times in the lateral direction. Thereafter, the film was further dried by being transported between rolls of a heat treatment device, thereby obtaining a support A2 which was a transparent cellulose triacetate film derived from linter, having a thickness of 118 μm.

<Production of cover film>

A cover film of Comparative Example 4 was produced according to the method described in Example 1 above, except that the support A2 was used instead of the support A1.

[Measurement of physical properties of cover film]

[Glass transition temperature (Tg) of polymer layer]

The polymer layer was peeled off from the cover film produced in each example. The obtained polymer layer was cut into a size of 5 mm × 30 mm to obtain a sample A of the polymer layer. The obtained sample A was conditioned for 2 hours or more in an environment of 25°C and a relative humidity of 60%. Thereafter, using a dynamic viscoelasticity measuring device (Vibron: DVA-225 (manufactured by IT Keisoku Seigyo Co., Ltd.)), a peak temperature of a loss tangent (loss elastic modulus/storage elastic modulus) of the sample A, which was observed in a case of raising the temperature from 30°C, was measured under the conditions of a grip spacing of 20 mm, a temperature rising rate of 5 °C/min, and a frequency of 100 Hz, and a glass transition temperature Tg (°C) of the sample A was obtained.

[Xylene residual rate]

Each cover film for evaluating a xylene residual rate was produced according to the method described in Examples 1 to 10 and Comparative Examples 1 to 4, except that the support was coated with a coating liquid for forming a polymer layer in an amount such that a film thickness of solid contents (thickness of the polymer layer after drying) was 40 μm. The produced polymer layer is peeled off from the cover film, and the polymer layer having an area corresponding to a circle having a diameter of 20 mm is cut out to obtain a sample B of the polymer layer having a film thickness of 40 μm.

The sample B was placed in a stainless steel net in a bag shape, and the net containing the sample B was placed in a beaker having a capacity of 5 mL. 2 g of xylene was put into the beaker, and the sample B was immersed in xylene. During the immersion, the sample B was disposed so that the sample B was not exposed from the liquid surface of xylene. The temperature of xylene and the sample B in the immersion test was 25°C. The sample B was immersed in the xylene for 4 hours or longer, and then the net containing the residue of the sample B was taken out. The residue was dried together with the net, and xylene was removed until the weight was no longer reduced. The weight of the residue after the drying was measured, and a xylene residual rate (% by mass) was calculated from the weight of the obtained residue and the weight of the sample B measured before the immersion, according to the following expression.

Xylene residual rate = {(Weight of sample B before immersion - Weight of residue after immersion)/Weight of sample B before immersion} × 100

[Evaluation of cover film]

[Storability over time]

The cover film produced in each of Examples and Comparative Examples was bonded to glass slide using a cover aid automatic enclosing device (manufactured by SAKURA SEIKI Co., Ltd., "SCA-Film-J0") to produce a sample of bonded body. As an enclosing solvent, xylene was used.

The obtained sample was allowed to stand in an environment of 40°C and 80 %RH for 7 days to perform an accelerated test. The cover film of the sample after the accelerated test was visually observed, and the degree of increase in bubbles having a size of 1 mmφ or more and in area of the peeling occurrence portion with respect to the cover film of the sample before the accelerated test was evaluated according to the following standard for storability over time. In the following evaluation, 1 to 3 are levels at which there is no problem in practical use.

(Evaluation standard for storability over time)

1: increase in bubbles and peeling was not observed.
2: increase in any of bubbles and peeling was observed, in which the increase in the number of bubbles was less than 2, and the increase in the area of the peeling occurrence portion was less than 5% of the total area of the cover film.
3: increase in the number of bubbles was 2 or more and less than 4, and/or the increase in the area of the peeling occurrence portion was 5% or more and less than 10% of the total area of the cover film; which did not correspond to the evaluation 4.
4: increase in the number of bubbles was 4 or more, and/or the increase in the area of the peeling occurrence portion was 10% or more of the total area of the cover film.

Table 1 shows the constituent material of the support, the formulation of the coating liquid for forming the polymer layer, the physical properties of the polymer layer, and the evaluation results.

In the following table, the column of "Raw material" of "Support" indicates a raw material of the constituent

material of the support.

Each column in "Coating liquid" indicates a component contained in the coating liquid for forming the polymer layer, used in each example.

The column of "ΔHSP" of "Component B" indicates the Hansen solubility parameter distance (unit: $MPa^{0.5}$) between the polymer used as the component B in each example and xylene, which was calculated by the above-described method.

[Table 1]

| | | | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 | Comparative Example 4 |
|---|---|---|---|---|---|---|---|---|---|---|---|---|---|---|---|---|
| Support | No. | | A1 | A1 | A1 | A1 | A1 | A1 | A1 | A1 | A1 | A1 | A1 | A1 | A1 | A2 |
| | Constituent material | | TAC | TAC | TAC | TAC | TAC | TAC | TAC | TAC | TAC | TAG | TAC | TAC | TAC | TAC |
| | Raw material | | Pulp | Pulp | Pulp | Pulp | Pulp | Pulp | Pulp | Pulp | Pulp | Pulp | Pulp | Pulp | Pulp | Linter |
| Coating liquid | Polymer A | Addition amount (part by mass) | 16 | 16 | 16 | 16 | 15 | 13 | 16 | 16 | 20 | 20 | 16 | 23 | 11 | 16 |
| | | Type | A-1 | A-1 | A-1 | A-1 | A-1 | A-1 | A-1 | A-1 | A-1 | A-2 | A-1 | A-1 | A-1 | A-1 |
| | Component B | Addition amount (part by mass) | 9 | 9 | 9 | 9 | 10 | 12 | 9 | 9 | 8 | 9 | - | 2 | 14 | 9 |
| | | Type | B-1 | B-2 | B-3 | B-4 | B-2 | B-2 | B-5 | B-6 | B-1 | B-1 | - | B-1 | B-2 | B-1 |
| | | ΔHSP | 10 | 12 | 8 | 14 | 12 | 12 | 6 | 4 | 10 | 10 | - | 10 | 12 | 10 |
| | Additive | Addition amount (part by mass) | - | - | - | - | - | - | - | 0.1 | 1 | - | - | - | - | - |
| | | Type | - | - | - | - | - | - | - | Photopolymerization initiator | Plasticizer | - | - | - | - | - |
| | Solvent | Toluene (part by mass) | 19 | 19 | 19 | 19 | 19 | 19 | 19 | 19 | 19 | 19 | 19 | 19 | 19 | 19 |
| | | Ethyl acetate (part by mass) | 56 | 56 | 56 | 56 | 56 | 56 | 56 | 56 | 56 | 56 | 56 | 56 | 56 | 56 |
| Polymer layer | Tg [°C] | | 52 | 64 | 72 | 110 | 62 | 57 | 65 | 60 | 62 | 62 | 63 | 68 | 50 | 51 |
| | Xylene residual rate | | 35% | 35% | 35% | 35% | 40% | 50% | 15% | 35% | 30% | 25% | 0% | 8% | 55% | 35% |
| Evaluation | Storability over time | | 1 | 1 | 1 | 1 | 2 | 3 | 2 | 1 | 1 | 2 | 4 | 4 | 4 | 4 |

From the results shown in the table, it was found that the cover film according to the embodiment of the present invention was excellent in the effect of the present invention, as compared with the cover films of Comparative Examples 1 to 4, in which the support did not contain the cellulose triacetate derived from wood pulp or the xylene residual rate of the polymer layer was less than 10% by mass or more than 50% by mass.

It was found that, in a case where the polymer contained in the polymer layer included an acrylic resin having two or more repeating units derived from a monomer selected from the group consisting of an acrylate monomer and a methacrylate monomer, the effect of the present invention was more excellent (comparison between Example 1 and Example 10).

It was found that, in a case where the polymer contained in the polymer layer included a polymer having a ΔHSP to xylene of 8 or more, the effect of the present invention was more excellent (comparison of Examples 1 to 4 and Example 7).

It was found that, in a case where the xylene residual rate of the polymer layer was 40% by mass or less, the effect of the present invention was more excellent; and in a case where the xylene residual rate of the polymer layer was 28% to 37% by mass, the effect of the present invention was further excellent (comparison of Examples 1 to 9).

## Claims

**1.** A cover film comprising:

a support; and
a polymer layer containing a polymer,
wherein the support contains a cellulose triacetate derived from wood pulp, and
the polymer layer satisfies the following requirement 1,
requirement 1: a residual rate of the polymer layer is 10% to 50% by mass before and after the polymer layer is immersed in xylene at 25°C after being peeled off from the cover film.

**2.** The cover film according to claim 1,
wherein the polymer includes a polymer A which is at least one selected from the group consisting of an acrylic resin and a polyester resin.

**3.** The cover film according to claim 1,
wherein the polymer includes an acrylic resin which has two or more repeating units derived from a monomer selected from the group consisting of an acrylate monomer and a methacrylate monomer.

**4.** The cover film according to claim 2,
wherein a weight-average molecular weight of the acrylic resin is 50,000 to 150,000.

**5.** The cover film according to claim 1,
wherein a glass transition temperature of the polymer layer is 35°C or higher.

**6.** The cover film according to any one of claims 1 to 5,
wherein the polymer includes a polymer B1 having a Hansen solubility parameter distance to xylene of 8 $MPa^{0.5}$ or more.

**7.** The cover film according to claim 6,
wherein the polymer B1 includes at least one selected from the group consisting of a polymer having a polyoxyalkylene chain, a polymer having a polyalkyleneimine chain, a polymer having a cyclic amide group, and a cellulose acetate.

**8.** The cover film according to any one of claims 1 to 5,
wherein the polymer includes a polymer B2 having a crosslinking structure.

**9.** The cover film according to any one of claims 1 to 5,
wherein the polymer layer further contains a plasticizer.

**10.** The cover film according to any one of claims 1 to 5,
wherein the cover film is used for covering a test subject on a base material in microscopic observation.

## INTERNATIONAL SEARCH REPORT

International application No.
**PCT/JP2023/032321**

### A. CLASSIFICATION OF SUBJECT MATTER

***B32B 23/08***(2006.01)i; ***B32B 27/30***(2006.01)i; ***C08J 7/04***(2020.01)i
FI: B32B23/08; B32B27/30 A; C08J7/04 B CEP

According to International Patent Classification (IPC) or to both national classification and IPC

### B. FIELDS SEARCHED

Minimum documentation searched (classification system followed by classification symbols)

B32B1/00-43/00;; C08J7/00-7/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2021/187262 A1 (FUJIFILM CORP) 23 September 2021 (2021-09-23) entire text | 1-10 |
| A | WO 2021/187269 A1 (FUJIFILM CORP) 23 September 2021 (2021-09-23) entire text | 1-10 |
| A | WO 2022/014374 A1 (FUJIFILM CORP) 20 January 2022 (2022-01-20) entire text | 1-10 |
| A | WO 2021/251424 A1 (FUJIFILM CORP) 16 December 2021 (2021-12-16) entire text | 1-10 |
| A | JP 62-38408 A (FUJI PHOTO FILM CO LTD) 19 February 1987 (1987-02-19) entire text | 1-10 |

☐ Further documents are listed in the continuation of Box C.  ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **06 October 2023** | **24 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/032321**

| Patent document cited in search report | Publication date (day/month/year) | Patent family member(s) | Publication date (day/month/year) |
|---|---|---|---|
| WO 2021/187262 A1 | 23 September 2021 | (Family: none) | |
| WO 2021/187269 A1 | 23 September 2021 | (Family: none) | |
| WO 2022/014374 A1 | 20 January 2022 | (Family: none) | |
| WO 2021/251424 A1 | 16 December 2021 | US 2023/0109172 A1<br>EP 4166615 A1 | |
| JP 62-38408 A | 19 February 1987 | US 4853262 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 10988590 B
- JP 2005082744 A
- US 20180194913 A
- JP 2020105336 A


### Non-patent literature cited in the description


- **CHARLES M. HANSEN.** Hansen Solubility Parameters: A User's Handbook. CRC Press, 2007